# EUROPÄISCHE PATENTSCHRIFT

(11) **EP 1 536 983 B1**
(45) Veröffentlichungstag und Bekanntmachung des Hinweises auf die Patenterteilung: **08.03.2006**
(21) Anmeldenummer: 03747898.9
(22) Anmeldetag: 14.08.2003
(51) Int. Cl.: B60R 13/02

(54) **VERKLEIDUNGSELEMENT FÜR DEN INNENRAUM EINES FAHRZEUGS**
TRIMMING ELEMENT FOR THE INTERIOR OF A VEHICLE
ELEMENT DE GARNITURE POUR L'HABITACLE D'UN VEHICULE

(30) Priorität: 31.08.2002 DE 10240270
(43) Veröffentlichungstag der Anmeldung: 08.06.2005
(73) Patentinhaber: Johnson Controls GmbH, 51399 Burscheid (DE)
(72) Erfinder: NEUMANN, Michael, 51579 Gevelsberg (DE)
(74) Vertreter: Hemmelmann, Klaus
(86) Internationale Anmeldenummer: PCT/EP2003/009019
(87) Internationale Veröffentlichungsnummer: WO 2004/024510

(56) Entgegenhaltungen:
- DE-A- 19 524 602
- DE-A- 19 845 100
- DE-U- 9 321 214

## Beschreibung

### Beschreibung

Die Erfindung betrifft ein Verkleidungselement für den Innenraum eines Fahrzeugs, insbesondere eines Kraftfahrzeugs, mit einem Basisteil, das auf seiner dem Fahrzeuginnenraum zugewandten, zur Abgabe von Licht geeigneten Flächenseite mit einer lichtdurchlässigen Deckschicht versehen ist.

### Stand der Technik

Aus der Patentschrift DE 198 22 425 C1 ist ein gattungsgemäßes Verkleidungsteil zur Verwendung im Innenraum eines Kraftfahrzeugs bekannt. Es besteht aus einem durchsichtigen, lichtleitfähigen Basisteil, dass innenraumseitig mit einer Deckschicht aus Naturstein ausgestattet ist. Der Naturstein ist ausreichend dünn geschnitten, um zur Erzielung eines optischen Effekts einen Lichtdurchtritt zu ermöglichen und mit dem Basisteil mittels eines Klebstoffs verbunden. Optional kann die Deckschicht noch mit einem zähelastischen Klarlack versehen werden, der bei einem unfallbedingten Bruch des Natursteins das Umherfliegen von Splittern verhindert.

Diese eher exotische Ausbildung ist naturgemäß eher bei kleinen, insbesondere schmalen Bauteilen, beispielsweise Zierleisten einsetzbar.

Bedingt durch die innenraumseitig verwendeten Werkstoffe weisen derartige Verkleidungsteile eine harte Oberfläche mit einer entsprechend unangenehmen Haptik auf.

In der Druckschrift DE 198 45 100 A1 wird ferner ein Verkleidungsteil mit offenbart, das ein elastomeres, gegebenenfalls auch transparentes Außenmaterial aufweist, welches formschlüssig in eine Aufnahme des Basisteils eingelassen ist. Zur Erzeugung optischer Effekte kann eine Beleuchtungseinrichtung in das Außenmaterial eingebettet werden.

Bei dieser Ausbildung kann zwar eine ansprechende Haptik erzeugt werden, der optische Eindruck ist jedoch wegen der lokal unterschiedlichen Lichtintensität unbefriedigend.

### Aufgabe

Der Erfindung liegt die Aufgabe zugrunde, ein optisch und haptisch ansprechendes, auch großflächig ausbildbares Verkleidungsteil mit einer lichtabgebenden Oberfläche bereitzustellen.

### Lösung

Die Aufgabe wird erfindungsgemäß dadurch gelöst, dass das Basisteil entweder als lichtleiter oder unmittelbar als Lichterzeuger ausgebildet und die Deckschicht elastisch-kompressibel ist.

Bevorzugt ist die Deckschicht transluzenz ausgebildet, wobei ihre Lichtdurchlässigkeit im sichtbaren Spektralbereich (380 nm bis 780 nm, üblicherweise gemessen bei 550 nm) 1 bis 25%, insbesondere 5 bis 10% beträgt.

Nach einer besonderen Ausführung der Erfindung ist das Basisteil als plattenförmiger Lichtleiter ausgeführt, der mit einer Beleuchtungseinrichtung, beispielsweise einer Glühlampe oder einer Leuchtdiode (LED) in Wirkzusammenhang steht. Der Lichtleiter besteht vorzugsweise aus einem transparenten Kunststoff, insbesondere PMMA oder PC, und weist eine Struktur auf, mittels derer ein Lichtaustritt auf der dem Innenraum zugewandten Flächenseite des Lichtleiters herbeiführbar ist. Derartige Strukturen können beispielsweise durch einen Laserabtrag oder eine Behandlung durch Sandstrahlen auf der Oberfläche des Lichtleiters erzeugt werden, sind jedoch auch durch eine Strukturierung des Formwerkzeugs beim Spritzgießen oder im print-Verfahren erzeugbar. In Abhängigkeit von der gewählten Ausbildung kann die Struktur auf einer der beiden oder sogar beiden Flächenseiten oder ggf. sogar innerhalb des Lichtleiters angeordnet sein.

Alternativ kann vorgesehen werden, dass das plattenförmige Basisteil unmittelbar als Lichterzeuger, ausgebildet ist und beispielsweise eine Elektrolumineszenzfolie (EL-Folie) umfaßt. EL-Folien sind schneidbare und dreidimensional verformbare Leuchtfolien, die als sogenannte Lambertstrahler ein in jeder Blickrichtung gleichmäßiges, nahezu monochromatisches Licht von Blau bis Gelb (480 nm bis 580 nm) sowie deren Mischfarben, beispielsweise Weiß ausstrahlen. Grundsätzlich können jedoch auch andere flächige Lichtemitter, beispielsweise OLEDs (Organic Light Emitting Diods) oder PolyLEDs zum Einsatz kommen.

Die lichtdurchlässige, elastisch-kompressible Deckschicht besteht vorzugsweise aus einem Elastomer, insbesondere EPDM, Silikon oder Polyurethan, das über seine gesamte Dicke oder auch nur partiell eine ihre Härte herabsetzende Schaumstruktur aufweist. Das Elastomer weist mit Vorteil bei Raumtemperatur eine Härte von 20 bis 70 Shore A, insbesondere etwa 40 Shore A auf, um dem Verkleidungselement insgesamt unter dem im Fahrzeuginnenraum herrschenden Klima eine angenehme Haptik zu verleihen.

Nach einer anderen Ausbildung der Erfindung umfaßt die Deckschicht eine zum Innenraum hin mittels einer Folie abgedeckte Lage aus einer gelartigen Substanz, die bei Raumtemperatur vorzugsweise eine dynamische Viskosität von 0,01 bis 10 Pa.s, insbesondere 0,1 bis 1 Pa.s (honigartig) aufweist und unter örtlichem Druck (Berühren der innenraumseitigen Oberfläche des Verkleidungselements) zähfließend zur Seite hin in den verbleibenden gelgefüllten Spalt unterhalb der Folie entweicht.

Die gelartige Substanz ist bevorzugt zwischen zwei Folien angeordnet und kann in dieser Form auf das flächige Basisteil aufgeklebt werden.
Die innenraumseitige Folie muß einerseits eine relativ geringe Dicke aufweisen, um ihrerseits die Steifigkeit der Deckschicht nicht zu sehr zu erhöhen, andererseits jedoch eine ausreichende Festigkeit aufweisen. Geeignet sind beispielsweise Polyurethanfolien mit einer Dicke von 0,1 bis 1,5 mm, insbesondere von 0,5 bis 1,0 mm.

Die Dicke der Deckschicht insgesamt beträgt vorzugsweise 1,0 bis 5,0 mm, insbesondere 2,0 bis 3,0 mm, so dass sich ihre Kanten mit sicht- und fühlbaren Rundungen versehen lassen, die den Gesamteindruck des Verkleidungselements optimieren.

### Figuren

Die Figuren stellen beispielhaft und schematisch verschiedene Ausführungen der Erfindung dar.

Es zeigen:
- Fig. 1: ein Verkleidungsteil nach einer ersten Ausführung der Erfindung im Längsschnitt
- Fig. 2: einen Längsschnitt durch ein weiteres erfindungsgemäßes Verkleidungselement

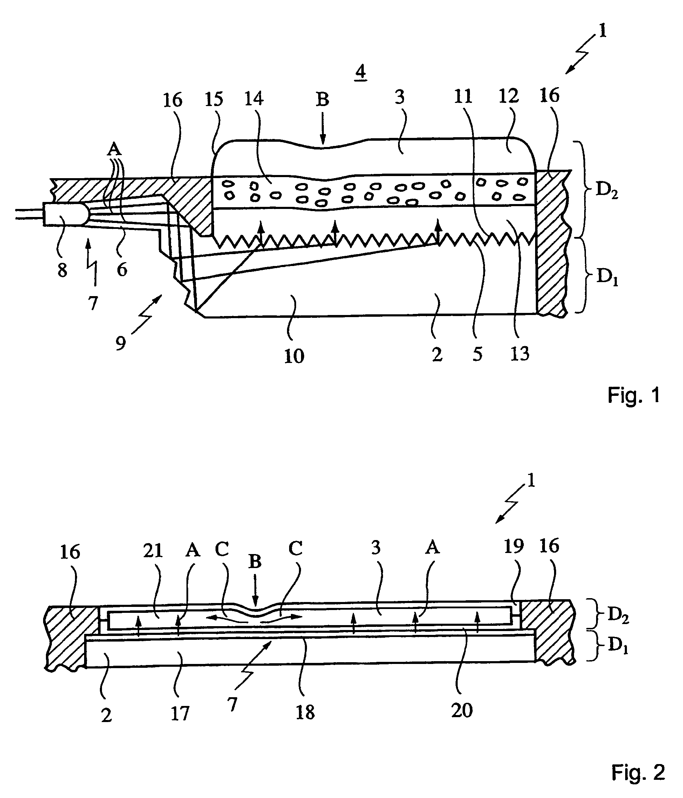

Das in Fig. 1 dargestellte Verkleidungselement 1 besteht aus einem Basisteil 2 mit einer Dicke D₁ und einer Deckschicht 3 mit einer Dicke D₂. Das Basisteil 2 ist als Spitzgießteil aus einem transparenten Kunststoff mit einer dem Fahrzeuginnenraum 4 zugewandten strukturierten Oberfläche 5 ausgebildet. Über einen angeformten seitlichen Lichtkanal 6 (alternativ auch mittels eines Glasfaser-Lichtleiters) wird das in einem gesonderten Lichterzeuger 7 in Form einer Leuchtdiode 8 erzeugte Licht (schematisch durch die Pfeile A dargestellt) mittels einer mit verspiegelten Oberflächen und versehenen, treppenförmig ausgebildeten Umlenkzone 9 in den ebenen, flächigen Lichtleiter 10 des Basisteils 2 eingespeist, wo es über die Fläche des Verkleidungselements 1 verteilt wird.

Über die strukturierte Oberfläche 5 tritt das Licht in die Deckschicht 3 ein, die aus einem transluzenten Elastomer besteht und mittels eines transparenten Klebstoffs 11 auf das Basisteil 2 aufgeklebt ist. Die Deckschicht 3 weist zwei Außenlagen 12, 13 aus kompaktem Material sowie eine geschäumte Kernlage 14 aus geschäumtem Werkstoff auf, die sich parallel zur strukturierten Oberfläche 5 des Basisteils 2 erstreckt. Die geschäumte Kernlage 14 erhöht einerseits die Kompressibilität der Deckschicht 3 und vergleichmäßigt darüber hinaus durch Streuung den Lichtdurchgang. Das Verkleidungselement 1 weist somit einen gleichförmigen Lichtaustritt sowie eine angenehme Haptik auf, da die Deckschicht 3 unter dem Druck einer Berührung (Pfeil B) elastisch-kompressible verformbar ist. Gerundete Kanten 15 am über die Umfassung 16 des Verkleidungselements 1 hinausragenden Teil der Deckschicht 3 verstärken den positiven Eindruck bei deren Berührung nochmals.

Bei der Ausführung nach Fig. 2 besteht das Basisteil 2 aus einem flächigen, im Hinblick auf seine optischen Eigenschaften beliebig ausführbaren Träger 17, der auf seiner dem Fahrzeuginnenraum 4 zugewandten Flächenseite mit einem Lichterzeuger 7 in Form einer Elektrolumineszenzfolie 18 ausgestattet ist. Diese erzeugt unmittelbar ein sehr gleichmäßig in Richtung der Pfeile A in die Decklage 3 eintretendes Licht.

Die transluzente Decklage 3 besteht ihrerseits aus einer oberen und einer unteren lichtdurchlässigen, biegsamen Kunststoffolie 19, 20, die randseitig dicht miteinander verbunden sind. Der Zwischenraum zwischen den Kunststoffolien 19, 20 ist mit einer trüben, gelartigen Substanz 21 gefüllt, die unter Druck (Pfeil B) auf die dem Innenraum zugewandte Oberfläche der Deckschicht 3 zähfließend seitlich ausweicht (Pfeile C).

Unabhängig von der gewählten Ausbildung wirkt die Deckschicht 3 in ihrer Gesamtheit transluzent mit einer Lichtdurchlässigkeit im sichtbaren Spektralbereich von 1 bis 25%, insbesondere 5 bis 10%. Diese Transluzenz ist einerseits ausreichend, um noch eine nennenswerte Lichtmenge vom Lichterzeuger 7 in den Fahrzeuginnenraum 4 abzugeben und führt andererseits doch dazu, dass eine außergewöhnlich gleichmäßige, auch bei Dunkelheit angenehm blendfreie Lichtemission erzielt wird. Es ist darüber hinaus möglich, die Deckschicht 3 zusätzlich mit einem durchscheinenden textilen Überzug zu versehen, sofern die gewünschte Transluzenz insgesamt erhalten bleibt. Ebenso ist es möglich, diese durch das Aufbringen einer dünnen opaken Schicht auf einen an sich transparenten Grundkörper zu erzeugen.

Das erfindungsgemäße Verkleidungselement kann grundsätzlich in beliebiger Größe und Gestalt ausgeführt werden, so auch als dreidimensional geformter Dachhimmel, als Türverkleidung, Säulenverkleidung, Sonnenblende oder rückseitige Verkleidung der Rückenlehne eines Fahrzeugsitzes. Durch die Beleuchtung kann im gesamten Fahrzeuginnenraum ein angenehmes Ambiente geschaffen werden, das Verkleidungselement kann jedoch in Form eines Orientierungslichts oder in Verbindung mit Bedienelementen eingesetzt werden.

### Bezugszeichen

- 1: Verkleidungselement
- 2: Basisteil
- 3: Deckschicht
- 4: Fahrzeuginnenraum
- 5: strukturierte Oberfläche
- 6: Lichtkanal
- 7: Lichterzeuger
- 8: Leuchtdiode
- 9: Umlenkzone
- 10: Lichtleiter
- 11: Klebstoff
- 12, 13: Außenlage
- 14: Kernlage
- 15: Kante
- 16: Umfassung
- 17: Träger
- 18: Elektrolumineszenzfolie
- 19, 20: Kunststoffolie
- 21: gelartige Substanz

- D₁: Dicke Basisteil
- D₂: Dicke Deckschicht

- A: Pfeil (Strahlengang Licht)
- B: Pfeil (Druck bei Berührung)
- C: Pfeil (ausweichende gelartige Substanz)

## Patentansprüche

1. Verkleidungselement (1) für den Innenraum eines Fahrzeugs, insbesondere eines Kraftfahrzeugs, mit einem Basisteil (2), das auf seiner dem Fahrzeuginnenraum (4) zugewandten, zur Abgabe von Licht geeigneten Flächenseite mit einer lichtdurchlässigen Deckschicht (3) versehen ist, **dadurch gekennzeichnet, dass** das Basisteil (2) entweder als Lichtleiter (10) oder unmittelbar als Lichterzeuger (7) ausgebildet und die Deckschicht (3) elastisch-kompressibel ist.

2. Verkleidungselement nach Anspruch 1, **dadurch gekennzeichnet, dass** die Deckschicht (3) transluzenz ausgebildet ist.

3. Verkleidungselement nach Anspruch 2, **dadurch gekennzeichnet, dass** die transluzente Deckschicht (3) im sichtbaren Spektralbereich eine Lichtdurchlässigkeit von 1 bis 25%, insbesondere 5 bis 10% aufweist.

4. Verkleidungselement nach einem der vorhergehenden Ansprüche, **dadurch gekennzeichnet, dass** das Basisteil (2) als plattenförmiger Lichtleiter (10) ausgeführt ist, der mit einem Lichterzeuger (7) in Wirkzusammenhang steht.

5. Verkleidungselement nach Anspruch 4, **dadurch gekennzeichnet, dass** der Lichtleiter (10) aus einem transparent Kunststoff, insbesondere PMMA oder PC, besteht und eine Struktur aufweist, mittels derer ein Lichtaustritt auf der dem Innenraum zugewandten Flächenseite des Lichtleiters herbeiführbar ist.

6. Verkleidungselement nach einem der Ansprüche 1 bis 3, **dadurch gekennzeichnet, dass** das Basisteil (2) unmittelbar als Lichterzeuger (7) ausgebildet ist.

7. Verkleidungselement nach Anspruch 6, **dadurch gekennzeichnet, dass** das Basisteil (2) eine Elektrolumineszenzfolie (18), OLED oder PolyLED umfaßt.

8. Verkleidungselement nach einem der vorhergehenden Ansprüche, **dadurch gekennzeichnet, dass** die lichtdurchlässige Deckschicht (3) aus einem Elastomer, insbesondere EPDM, Silikon oder Polyurethan besteht.

9. Verkleidungselement nach Anspruch 6, **dadurch gekennzeichnet, dass** das Elastomer zumindest partiell eine Schaumstruktur aufweist.

10. Verkleidungselement nach Anspruch 8 oder 9, **dadurch gekennzeichnet, dass** das Elastomer eine Härte von 20 bis 70 Shore A, insbesondere etwa 40 Shore A aufweist.

11. Verkleidungselement nach einem der Ansprüche 1 bis 7, **dadurch gekennzeichnet, dass** die Deckschicht (3) eine zum Fahrzeuginnenraum (4) hin mittels einer Kunststoffolie (19) abgedeckten Lage aus einer gelartigen Substanz (21) umfaßt.

12. Verkleidungselement nach Anspruch 11, **dadurch gekennzeichnet, dass** die gelartige Substanz (21) eine dynamische Viskosität von 0,01 bis 10 Pa·s, insbesondere 0,1 bis 1 Pa.s aufweist.

13. Verkleidungselement nach Anspruch 9 oder 10, **dadurch gekennzeichnet, dass** die gelartige Substanz zwischen zwei Kunststoffolien (19), (20) angeordnet ist.

14. Verkleidungselement nach einem der Ansprüche 11 bis 13, **dadurch gekennzeichnet, dass** zumindest die innenraumseitige die Kunststoffolie (19) eine Dicke von 0,1 bis 1,5 mm, insbesondere 0,5 bis 1,0 mm aufweist.

15. Verkleidungselement nach einem der vorhergehenden Ansprüche, **dadurch gekennzeichnet, dass** die Deckschicht (3) insgesamt eine Dicke von 1,0 bis 5,0 mm, insbesondere 2,0 bis 3,0 mm aufweist.

## Claims

1. Lining element (1) for the interior of a vehicle, in particular a motor vehicle, having a base part (2) which, on its surface side facing the interior (4) of the vehicle and suitable for emitting light, is provided with a translucent covering layer (3), **characterized in that** the base part (2) is designed either as optical conductor (10) or directly as light generator (7) and the covering layer (3) is elastically compressible.

2. Lining element according to Claim 1, **characterized in that** the covering layer (3) is designed to be translucent.

3. Lining element according to Claim 2, **characterized in that** the translucent covering layer (3) has an optical transmissivity in the visible spectral range of 1 to 25%, in particular 5 to 10%.

4. Lining element according to one of the preceding claims, **characterized in that** the base part (2) is designed as a plate-like optical conductor (10), which is operationally associated with a light generator (7).

5. Lining element according to Claim 4, **characterized in that** the optical conductor (10) consists of a transparent plastic, in particular PMMA or PC., and has a structure by means of which an output of light can be brought about on the surface side of the optical conductor facing the interior.

6. Lining element according to one of Claims 1 to 3, **characterized in that** the base part (2) is formed directly as a light generator (7).

7. Lining element according to Claim 6, **characterized in that** the base part (2) comprises an electroluminescent film (18), OLED or polyLED.

8. Lining element according to one of the preceding claims, **characterized in that** the translucent covering layer (3) consists of an elastomer, in particular EPDM, silicone or polyurethane.

9. Lining element according to Claim 6, **characterized in that** the elastomer has a foamed structure, at least partially.

10. Lining element according to Claim 8 or 9, **characterized in that** the elastomer has a hardness of 20 to 70 Shore A, in particular about 40 Shore A.

11. Lining element according to one of Claims 1 to 7, **characterized in that** the covering layer (3) comprises a layer of a gel-like substance (21) covered towards the interior (4) of the vehicle by means of a plastic film (19).

12. Lining element according to Claim 11, **characterized in that** the gel-like substance (21) has a dynamic viscosity of 0.01 to 10 Pa·s, in particular 0.1 to 1 Pa·s.

13. Lining element according to Claim 9 or 10, **characterized in that** the gel-like substance is arranged between two plastic films (19), (20).

14. Lining element according to one of Claims 11 to 13, **characterized in that** at least the plastic film (19) on the side of the interior has a thickness of 0.1 to 1.5 mm, in particular 0.5 to 1.0 mm.

15. Lining element according to one of the preceding claims, **characterized in that** the covering element (3) has a thickness overall of 1.0 to 5.0 mm, in particular 2.0 to 3.0 mm.

## Revendications

1. Élément de garniture (1) pour l'habitacle d'un véhicule, notamment d'un véhicule automobile, avec une partie de base (2) qui est pourvue, sur sa surface tournée vers l'habitacle (4) du véhicule et convenant pour émettre de la lumière, d'une couche de recouvrement (3) laissant passer la lumière, **caractérisé en ce que** la partie de base (2) est conçue soit comme guide de lumière (10), soit directement comme générateur de lumière (7), et la couche de recouvrement (3) est élastiquement compressible.

2. Élément de garniture selon la revendication 1, **caractérisé en ce que** la couche de recouvrement (3) est réalisée translucide.

3. Élément de garniture selon la revendication 2, **caractérisé en ce que** la couche de recouvrement translucide (3) présente dans la plage du spectre visible une translucidité de 1 à 25%, notamment de 5 à 10%.

4. Élément de garniture selon l'une quelconque des revendications précédentes, **caractérisé en ce que** la partie de base (2) est conçue comme guide de lumière (10) en forme de plaque, qui se trouve en relation opérationnelle avec un générateur de lumière (7).

5. Élément de garniture selon la revendication 4, **caractérisé en ce que** le guide de lumière (10) est constitué d'une matière plastique transparente, notamment de polyméthacrylate de méthyle ou de polycarbonate, et présente une structure au moyen de laquelle une émission de lumière peut être produite sur la surface du guide de lumière qui est tournée vers l'habitacle.

6. Élément de garniture selon l'une quelconque des revendications 1 à 3, **caractérisé en ce que** la partie de base (2) est directement conçue comme générateur de lumière (7).

7. Élément de garniture selon la revendication 6, **caractérisé en ce que** la partie de base (2) comprend un film électroluminescent (18), à diodes électroluminescentes organiques ou à polymères électroluminescents.

8. Élément de garniture selon l'une quelconque des revendications précédentes, **caractérisé en ce que** la couche de recouvrement (3) laissant passer la lumière est constituée d'un élastomère, notamment de terpolymère éthylène-propylène-diène (EPDM), de silicone ou de polyuréthane.

9. Élément de garniture selon la revendication 6, **caractérisé en ce que** l'élastomère présente au moins partiellement une structure alvéolaire.

10. Élément de garniture selon la revendication 8 ou 9, **caractérisé en ce que** l'élastomère présente une dureté de 20 à 70 Shore A, notamment d'environ 40 Shore A.

11. Élément de garniture selon l'une quelconque des revendications 1 à 7, **caractérisé en ce que** la couche de recouvrement (3) comprend une couche de substance du genre gel (21) recouverte d'un film plastique (19) vers l'habitacle (4) du véhicule.

12. Élément de garniture selon la revendication 11, **caractérisé en ce que** la substance du genre gel (21) présente une viscosité dynamique de 0,01 à 10 Pa.s, notamment de 0,1 à 1 Pa.s.

13. Élément de garniture selon la revendication 9 ou 10, **caractérisé en ce que** la substance du genre gel est disposée entre deux films plastiques (19), (20).

14. Élément de garniture selon l'une quelconque des revendications 11 à 13, **caractérisé en ce qu'**au moins le film plastique côté habitacle (19) présente une épaisseur de 0,1 à 1,5 mm, notamment de 0,5 à 1,0 mm.

15. Élément de garniture selon l'une quelconque des revendications précédentes, **caractérisé en ce que** la couche de recouvrement (3) présente une épaisseur totale de 1,0 à 5,0 mm, notamment de 2,0 à 3,0 mm.
